# EUROPEAN PATENT SPECIFICATION

(11) **EP 2 822 501 B1**
(45) Date of publication and mention of the grant of the patent: **31.07.2019**
(21) Application number: 13758036.1
(22) Date of filing: 05.03.2013
(51) Int. Cl.: A61C 17/02

(54) **ORAL CARE DEVICE**
MUNDPFLEGEVORRICHTUNG
DISPOSITIF DE SOINS BUCCAUX

(30) Priority: 07.03.2012 US 201213413760
(43) Date of publication of application: 14.01.2015
(73) Proprietor: Johnson & Johnson Consumer Inc., Skillman, NJ 08558 (US)
(72) Inventor: MCDONOUGH, Justin E., Flemington, New Jersey 08822 (US); FUSI, Robert W., II, Flemington, New Jersey 08822 (US); FOUGERE, Richard J., Washington Crossing, Pennsylvania 18977 (US)
(74) Representative: Carpmaels & Ransford LLP
(86) International application number: PCT/US2013/029057
(87) International publication number: WO 2013/134229

(56) References cited:
- JP-A- 2006 020 887
- US-A- 3 731 675
- US-A- 4 164 940
- US-A1- 2007 184 404
- US-A1- 2011 027 746
- US-A1- 2012 021 375

## Description

### FIELD OF THE INVENTION

The present invention relates to oral care devices suitable for in-home use to provide a beneficial effect to the oral cavity of a mammal.

### BACKGROUND OF THE INVENTION

In addition to regular professional dental checkups, daily oral hygiene is generally recognized as an effective preventative measure against the onset, development, and/or exacerbation of periodontal disease, gingivitis and/or tooth decay. Unfortunately, however, even the most meticulous individuals dedicated to thorough brushing and flossing practices often fail to reach, loosen and remove deep-gum and/or deep inter-dental food particulate, plaque or biofilm. Most individuals have professional dental cleanings biannually to remove tarter deposits.

For many years products have been devised to facilitate the simple home cleaning of teeth, although as yet a single device which is simple to use and cleans all surfaces of a tooth and/or the gingival or sub-gingival areas simultaneously is not available. The conventional toothbrush is widely utilized, although it requires a significant input of energy to be effective and, furthermore, a conventional toothbrush cannot adequately clean the inter-proximal areas of the teeth. Cleaning of the areas between teeth currently requires the use of floss, pick, or some such other additional device apart from a toothbrush.

Electric toothbrushes have achieved significant popularity and, although these reduce the energy input required to utilize a toothbrush, they are still inadequate to ensure proper inter-proximal tooth cleaning. Oral irrigators are known to clean the inter-proximal area between teeth. However, such devices have a single jet which must be directed at the precise inter-proximal area involved in order to remove debris. These water pump type cleaners are therefore typically only of significant value in connection with teeth having braces thereupon which often trap large particles of food. It will be appreciated that if both debris and plaque are to be removed from teeth, at present a combination of a number of devices must be used, which is extremely time consuming and inconvenient.

In addition, in order for such practices and devices to be effective, a high level of consumer compliance with techniques and/or instructions is required. The user-to-user variation in time, cleaning/treating formula, technique, etc., will affect the cleaning of the teeth.

The present invention ameliorates one or more of the above mentioned disadvantages with existing oral hygiene apparatus and methods, or at least provides the market with an alternative technology that is advantageous over known technology, and also may be used to ameliorate a detrimental condition or to improve cosmetic appearance of the oral cavity.

US 2012/021375 A1 describes devices for collecting a fluid sample from the oral cavity, the device including a mouthpiece that includes a chamber, the chamber including front and rear inner walls.

US 3731675 A describes an apparatus for cleaning and polishing teeth wherein a mouthpiece is adapted to fit over a portion of the dentition and sealably engage the gums and including a plurality of interiorly disposed spaced inlet and exhaust ports.

US 2007/184404 A1 describes a device for cleaning and care of teeth and gums comprising a molded spoon-shaped mouthpiece for an upper or lower jaw provided with a channel ending in a nozzle for applying liquid to teeth and gums.

### SUMMARY OF THE INVENTION

The invention is defined by the appended claims.

### BRIEF DESCRIPTION OF THE DRAWINGS

FIG. 1 is a schematic drawing of one embodiment of a system using a device according to the present invention;
FIG. 2 is a schematic drawing of an alternative embodiment of a system using a device according to the present invention;
FIG. 3a is a perspective drawing of an embodiment of a reciprocating flow controller;
FIG. 3b is an exploded view of the reciprocating flow controller of FIG 3a;
FIG. 3c is a top view of the reciprocating flow controller of FIG 3a in its first position;
FIG. 3d is a top view of the reciprocating flow controller of FIG 3a in its second position;
FIG. 4 is a top rear perspective view of an embodiment of a device according to the present invention;
FIG. 5 is a top front perspective view of the embodiment of the device of FIG. 4;
FIG. 6 is a top view of the device of FIG. 4;
FIG. 7 is a partial cross-sectional view of the device of FIG. 4;
FIG. 8 is a cross-sectional view of the device of FIG. 6 along the 8---8 plane;
FIG. 9a is a cut-away view of the device of FIG. 4 in a third operating mode;
FIG. 9b is a cut-away view of the device of FIG. 4 in a fourth operating mode;
FIG. 9c is cut-away view of the device of FIG. 4 in a fifth operating mode;
FIG. 10 is a cut-away view of a hand piece for use in the present invention;
FIG. 11a is a back, top perspective view of an embodiment of a system including the present invention;
FIG. 11b is a front, top perspective view of the system of FIG. 11a;
FIG. 11c is a back, top perspective view of the system of FIG. 11a, with the base station fluid reservoir attached to the base station; and
FIG. 11d is a front, top perspective view of the system of FIG. 11a, with the base station fluid reservoir attached to the base station.

### DETAILED DESCRIPTION OF THE INVENTION

The terms "reciprocating movement of fluid(s)" and "reciprocation of fluid(s)" are used interchangeably herein. As used herein, both terms mean alternating the direction of flow of the fluid(s) back and forth over surfaces of the oral cavity of a mammal from a first flow direction to a second flow direction that is opposite the first flow direction.

By "effective fit or seal", it is meant that the level of sealing between the means for directing fluid onto and about the plurality of surfaces in the oral cavity which forms a part of the device according to the invention, e.g. an application tray or mouthpiece, is such that the amount of leakage of fluid from the device into the oral cavity during use is sufficiently low so as to reduce or minimize the amount of fluid used and to maintain comfort of the user, e.g. to avoid choking or gagging. Without intending to be limited, gagging is understood to be a reflex (i.e. not an intentional movement) muscular contraction of the back of the throat caused by stimulation of the back of the soft palate, the pharyngeal wall, the tonsillar area or base of tongue, meant to be a protective movement that prevents foreign objects from entering the pharynx and into the airway. There is variability in the gag reflex among individuals, e.g. what areas of the mouth stimulate it. In addition to the physical causes of gagging, there may be a psychological element to gagging, e.g. people who have a fear of choking may easily gag when something is placed in the mouth.

As used herein, "means for conveying fluid" includes structures through which fluid may travel or be transported throughout the systems and devices described herein and includes, without limitation passages, conduits, tubes, ports, portals, channels, lumens, pipes and manifolds. Such means for conveying fluids may be utilized in devices for providing reciprocation of fluids and means for directing fluids onto and about surfaces of the oral cavity. Such conveying means also provide fluid to the directing means and provides fluid to the reciprocation means from a reservoir for containing fluid, whether the reservoir is contained within a hand-held device containing the reciprocation means or a base unit. The conveying means also provides fluid from a base unit to a fluid reservoir contained within the hand-held device. Described herein are methods, devices and systems useful in providing a beneficial effect to an oral cavity of a mammal, e.g. a human.

Methods entail contacting a plurality of surfaces of the oral cavity with a fluid that is effective for providing the desired beneficial effect to the oral cavity. In such methods, reciprocation of the fluid(s) over the plurality of surfaces of the oral cavity may be provided under conditions effective to provide the desired beneficial effect to the oral cavity. Contact of the plurality of surfaces by the fluid may be conducted substantially simultaneous. By substantially simultaneous, it is meant that, while not all of the plurality of surfaces of the oral cavity are necessarily contacted by the fluid at the same time, the majority of the surfaces are contacted simultaneously, or within a short period of time to provide an overall effect similar to that as if all surfaces are contacted at the same time.

The conditions for providing the desired beneficial effect in the oral cavity may vary depending on the particular environment, circumstances and effect being sought. The different variables are interdependent in that they create a specific velocity of the fluid. The velocity requirement may be a function of the formulation in some embodiments. For example, with change in the viscosity, additives, e.g. abrasives, shear thinning agents, etc., and general flow properties of the formulation, velocity requirements of the jets may change to produce the same level of efficacy. Factors which may be considered in order to provide the appropriate conditions for achieving the particular beneficial effect sought include, without limitation, the velocity and/or flow rate and/or pressure of the fluid stream, pulsation of the fluid, the spray geometry or spray pattern of the fluid, the temperature of the fluid and the frequency of the reciprocating cycle of the fluid.

The fluid pressures, i.e. manifold pressure just prior to exit through the jets, may be from about 0.5 psi to about 30 psi, or from about 3 to about 15 psi, or about 5 psi. Flow rate of fluid may be from about 10 ml/s to about 60 ml/s, or about 20 ml/s to about 40 ml/s. It should be noted that the larger and higher quantity of the jets, the greater flow rate required at a given pressure/velocity. Pulse frequency (linked to pulse length and delivery (ml/pulse), may be from about 0.5 Hz to about 50 Hz, or from about 5 Hz to about 25 Hz. Delivery pulse duty cycle may be from about 10% to 100%, or from about 40% to about 60%. It is noted that at 100% there is no pulse, but instead a continuous flow of fluid. Delivery pulse volume (total volume through all jets/nozzles) may be from about 0.2 ml to about 120 ml, or from about 0.5 ml to about 15 ml. Velocity of jetted pulse may be from about 4 cm/s to about 400 cm/s, or from about 20 cm/s to about 160 in/s. Vacuum duty cycle may be from about 10% to 100%, or from about 50% to 100%. It is noted that vacuum is always on at 100%. Volumetric delivery to vacuum ratio may be from about 2:1 to about 1:20, or from about 1:1 to 1:10.

Once having the benefit of this disclosure, one skilled in the art will recognize that the various factors may be controlled and selected, depending on the particular circumstances and desired benefit sought.

The fluid(s) will include at least one ingredient, or agent, effective for providing the beneficial effect sought, in an amount effective to provide the beneficial effect when contacted with the surfaces of the oral cavity. For example, the fluid may include, without limitation, an ingredient selected from the group consisting of a cleaning agent, an antimicrobial agent, a mineralization agent, a desensitizing agent and a whitening agent. In certain embodiments, more than one fluid may be used in a single session. For example, a cleaning solution may be applied to the oral cavity, followed by a second solution containing, for example, a whitening agent or an antimicrobial agent. Solutions also may include a plurality of agents to accomplish more than one benefit with a single application. For example, the solution may include both a cleansing agent and an agent for ameliorating a detrimental condition, as further discussed below. In addition, a single solution may be effective to provide more than one beneficial effect to the oral cavity. For example, the solution may include a single agent that both cleans the oral cavity and acts as an antimicrobial, or that both cleans the oral cavity and whitens teeth.

Fluids useful for improving the cosmetic appearance of the oral cavity may include a whitening agent to whiten teeth in the cavity. Such whitening agents may include, without limitation, hydrogen peroxide and carbamide peroxide, or other agents capable of generating hydrogen peroxide when applied to the teeth. Such agents are well known within the art related to oral care whitening products such as rinses, toothpastes and whitening strips. Other whitening agents may include abrasives such as silica, sodium bicarbonate, alumina, apatites and bioglass.

It is noted that, while abrasives may serve to clean and/or whiten the teeth, certain of the abrasives also may serve to ameliorate hypersensitivity of the teeth caused by loss of enamel and exposure of the tubules in the teeth. For example, the particle size, e.g. diameter, of certain of the materials, e.g. bioglass, may be effective to block exposed tubules, thus reducing sensitivity of the teeth.

In some embodiments, the fluid may comprise an antimicrobial composition containing an alcohol having 3 to 6 carbon atoms. The fluid may be an antimicrobial mouthwash composition, particularly one having reduced ethanol content or being substantially free of ethanol, providing a high level of efficacy in the prevention of plaque, gum disease and bad breath. Noted alcohols having 3 to 6 carbon atoms are aliphatic alcohols. A particularly aliphatic alcohol having 3 carbons is 1-propanol.

In one embodiment the fluid may comprise an antimicrobial composition comprising (a) an antimicrobial effective amount of thymol and one or more other essential oils, (b) from about 0.01% to about 70. 0% v/v, or about 0.1% to about 30% v/v, or about 0.1% to about 10% v/v, or about 0.2% to about 8% v/v, of an alcohol having 3 to 6 carbon atoms and (c) a vehicle. The alcohol may be 1-propanol. The fluid vehicle can be aqueous or non-aqueous, and may include thickening agents or gelling agents to provide the compositions with a particular consistency. Water and water/ethanol mixtures are the preferred vehicle.

Another embodiment of the fluid is an antimicrobial composition comprising (a) an antimicrobial effective amount of an antimicrobial agent, (b) from about 0.01% to about 70% v/v, or about 0.1% to about 30% v/v, or about 0.2% to about 8% v/v, of propanol and (c) a vehicle. The antimicrobial composition of this embodiment exhibits unexpectedly superior delivery system kinetics compared to prior art ethanolic systems. Exemplary antimicrobial agents which may be employed include, without limitation, essential oils, cetyl pyidium chloride (CPC), chlorhexidine, hexetidine, chitosan, triclosan, domiphen bromide, stannous fluoride, soluble pyrophosphates, metal oxides including but not limited to zinc oxide, peppermint oil, sage oil, sanguinaria, dicalcium dihydrate, aloe vera, polyols, protease, lipase, amylase, and metal salts including but not limited to zinc citrate, and the like. A particularly preferred aspect of this embodiment is directed to an antimicrobial oral composition, e.g. a mouthwash having about 30% v/v or less, or about 10% v/v or less, or about 3% v/v or less, of 1-propanol.

Yet another embodiment of the fluid is a reduced ethanol, antimicrobial mouthwash composition which comprises (a) an antimicrobial effective amount of thymol and one or more other essential oils; (b) from about 0.01 to about 30.0% v/v, or about 0.1% to about 10% v/v, or about 0.2% to about 8% v/v, of an alcohol having 3 to 6 carbon atoms; (c) ethanol in an amount of about 25% v/v or less; (d) at least one surfactant; and (e) water. Preferably the total concentration of ethanol and alcohol having 3 to 6 carbon atoms is no greater than 30% v/v, or no greater than 25% v/v, or no greater than 22% v/v.

In still another embodiment, the fluid is an ethanol-free antimicrobial mouthwash composition which comprises (a) an antimicrobial effective amount of thymol and one or more other essential oils; (b) from about 0.01% to about 30.0% v/v, or about 0.1% to about 10% v/v, or about 0.2% to about 8%, of an alcohol having 3 to 6 carbon atoms; (c) at least one surfactant; and (d) water.

The alcohol having 3 to 6 carbon atoms is preferably selected from the group consisting of 1-propanol, 2-propanol, 1-butanol, 2-butanol, tert-butanol and corresponding diols. 1-Propanol and 2-propanol are preferred, with 1-propanol being most preferred.

In addition to generally improving the oral hygiene of the oral cavity by cleaning, for example, removal or disruption of plaque build-up, food particles, biofilm, etc., the inventions are useful to ameliorate detrimental conditions within the oral cavity and to improve the cosmetic appearance of the oral cavity, for example whitening of the teeth. Detrimental conditions may include, without limitation, caries, gingivitis, inflammation, symptoms associated with periodontal disease, halitosis, sensitivity of the teeth and fungal infection. The fluids themselves may be in various forms, provided that they have the flow characteristics suitable for use in devices and methods of the present invention. For example, the fluids may be selected from the group consisting of solutions, emulsions and dispersions. In certain embodiments, the fluid may comprise a particulate, e.g. an abrasive, dispersed in a fluid phase, e.g. an aqueous phase. In such cases, the abrasive would be substantially homogeneously dispersed in the aqueous phase in order to be applied to the surfaces of the oral cavity. In other embodiments, an oil-in-water or water-in-oil emulsion may be used. In such cases, the fluid will comprise a discontinuous oil phase substantially homogeneously dispersed within a continuous aqueous phase, or a discontinuous aqueous phase substantially homogenously dispersed in a continuous oil phase, as the case may be. In still other embodiments, the fluid may be a solution whereby the agent is dissolved in a carrier, or where the carrier itself may be considered as the agent for providing the desired beneficial effect, e.g., an alcohol or alcohol/water mixture, usually having other agents dissolved therein.

Disclosed herein are devices, e.g. oral care devices, for example a dental cleaning apparatus, suitable for in-home use and adapted to direct fluid onto a plurality of surfaces of a tooth and/or the gingival area, as well as methods and systems utilizing such devices. In certain embodiments the surfaces of the oral cavity are contacted by the fluid substantially simultaneously. As used herein, reference to the gingival area includes, without limitation, reference to the sub-gingival pocket. The appropriate fluid may be directed onto a plurality of surfaces of teeth and/or gingival area substantially simultaneously in a reciprocating action under conditions effective to provide cleaning, and/or general improvement of the cosmetic appearance of the oral cavity and/or amelioration of a detrimental condition of the teeth and/or gingival area, thereby providing generally improved oral hygiene of teeth and/or gingival area. For example, one such device cleans teeth and/or the gingival area and removes plaque using an appropriate cleaning fluid by reciprocating the fluid back and forth over the front and back surfaces and inter-proximal areas of the teeth, thereby creating a cleaning cycle while minimizing the amount of cleaning fluid used.

Devices that provide reciprocation of the fluid comprise a means for controlling reciprocation of the fluid. The controlling means include means for conveying the fluid to and from a means for directing the fluid onto the plurality of surfaces of the oral cavity. In certain embodiments, the means for providing reciprocation of the fluid comprises a plurality of portals for receiving and discharging the fluid, a plurality of passages, or conduits, through which the fluid is conveyed, and means for changing the direction of flow of the fluid to provide reciprocation of the fluid, as described in more detail herein below. The controlling means may be controlled by a logic circuit and/or a mechanically controlled circuit.

In certain embodiments, devices for providing reciprocation may include a means for attaching or connecting the device to a reservoir for containing the fluid. The reservoir may be removably attached to the device. In this case, the reservoir and the device may comprise means for attaching one to the other. After completion of the process, the reservoir may be discarded and replaced with a different reservoir, or may be refilled and used again. In other embodiments, the reciprocating device will include a reservoir integral with the device. In embodiments where the device may be attached to a base unit, as described herein, the reservoir, whether integral with the device or removably attached to the device, may be refilled from a supply reservoir which forms a part of the base unit. Where a base unit is utilized, the device and the base unit will comprise means for attaching one to the other.

The device will comprise a power source for driving the means for reciprocating fluids. The power source may be contained within the device, e.g. in the handle of the device, for example, batteries, whether rechargeable or disposable. Where a base unit is employed, the base may include means for providing power to the device. In other embodiments, the base unit may include means for recharging the rechargeable batteries contained within the device.

Devices for providing reciprocation of fluids will include means for attaching the device to means for directing the fluid onto the plurality of surfaces of the oral cavity, e.g. application tray or mouthpiece according to the invention. In certain embodiments, the directing means provides substantially simultaneous contact of the plurality of surfaces of the oral cavity by the fluid. The attachment means may provide removable attachment of the tray or mouthpiece to the device. In such embodiments, multiple users may use their own mouthpiece with the single device comprising the reciprocating means. In other embodiments, the attachment means may provide a non-removable attachment to the mouthpiece, whereby the mouthpiece is an integral part of the device. Devices for providing reciprocation as described above may be contained within a housing also containing other device components so as to provide a hand-held device suitable for providing fluid to the directing means, as described herein below.

Devices of the present invention comprise a chamber for maintaining the fluid proximate the plurality of surfaces, i.e. liquid-contacting-chamber (LCC). By "proximate", it is meant that the fluid is maintained in contact with the surfaces. The LCC is defined by the space bounded by the front inner wall and rear inner wall of the mouthpiece, and a wall, or membrane, extending between and integral with the front and rear inner walls of the mouthpiece, and in certain embodiments, a rear gum-sealing membrane. Together, the front and rear inner walls, the wall extending there between and rear gum-sealing membrane form the LCC membrane (JCCM). The general shape of the LCCM is that of a "U" or an "n", depending on the orientation of the mouthpiece, which follows the teeth to provide uniform and optimized contact by the fluid. The LCCM may be flexible or rigid depending on the particular directing means. The membrane may be located as a base membrane of the LCCM. The front and rear inner walls of the LCCM each include a plurality of openings, or slots, through which the fluid is directed to contact the plurality of surfaces of the oral cavity.

The LCCM design may be optimized for maximum effectiveness as it relates to the size, shape, thickness, materials, volume created around the teeth/gingiva, nozzle design and placement as it relates to the oral cavity and the teeth in conjunction with the manifold and gingival margin seal to provide comfort and minimize the gagging reflex of the user. The combination of the above provides effective contact of the teeth and gingival area by the fluid.

The LCCM provides a controlled and isolated environment with known volume, i.e. the LCC, to contact teeth and/or gingival area with fluids, and then to remove spent fluids, as well as debris, plaque, etc., from the LCC without exposing the whole oral cavity to fluid, debris, etc. This decreases the potential for ingestion of the fluids. The LCCM also allows increased flow rates and pressure of fluids without drowning the individual when significant flow rates are required to provide adequate cleaning, for example. The LCCM also allows reduced fluid quantities and flow rates when required, as only the area within the LCC is being contacted with fluid, not the entire oral cavity. The LCCM also allows controlled delivery and duration of contact of fluid on, through and around teeth and the gingival area, allowing increased concentrations of fluids on the area being contacted by the fluid, thereby providing more effective control and delivery of fluid.

The thickness of the walls of the LCCM may be within a range of 0.2 mm to 1.5 mm, to provide necessary physical performance properties, while minimizing material content, and optimizing performance. The distance between the inner walls of the LCCM to the teeth may be from about 0.1 mm to about 5 mm, and more typically an average distance of about 2.5 mm to provide maximum comfort, while minimizing customization and LCC volume requirements.

The size and shape of the mouthpiece preferably utilizes three basic universal sizes (small, medium and large) for both the top and bottom teeth, but the design provides mechanisms to allow different levels of customization as required to ensure comfort and functionality to the individual user. The device may incorporate a switching mechanism, which would allow it to be operable only when in the correct position in the mouth. The mouthpiece may include both upper and lower sections to provide substantially simultaneous contact of the plurality of surfaces of the oral cavity by fluid. In an alternate embodiment the upper and lower sections may be cleaned utilizing a single bridge that could be used on the upper or lower teeth and gums of the user (first placed one portion for cleaning, then subsequently placed over the other portion for cleaning).

The number and location of openings, also referred to herein as slots, jets or nozzles, contained within the inner walls of the mouthpiece through which the fluid is directed will vary and be determined based upon the circumstances and environment of use, the particular user and the beneficial effect being sought. The cross-sectional geometry of the openings may be circular, elliptical, trapezoidal, or any other geometry that provides effective contact of the surfaces of the oral cavity by the fluid. The location and number of openings may be designed to direct jets of fluid in a variety of spray patterns effective for providing the desired beneficial effect. Opening diameters may be from about 0.1 to about 3 mm, or from about 0.2 mm to about 0.8 mm, or about 0.5 mm, to provide effective cleaning and average jet velocities and coverage.

Optimal opening placement and direction/angles allows coverage of substantially all teeth surfaces in the area if the oral cavity to be contacted by fluid, including but not limited to interdental, top, side, back, and gingival pocket surfaces. In alternate embodiments, the openings could be of different sizes and different shapes to provide different cleaning, coverage and spray patterns, to adjust velocities, density and fan patterns (full cone, fan, partial, cone, jet), or due to formulation consideration. Nozzles could also be designed to be tubular and or extend from the LCC membrane to provide directed spray, or act as sprinkler like mechanism to provide extended coverage across the teeth, similar to a hose sprinkler system. The nozzles are preferably integral to the inner walls of the LCC membrane and can be incorporated into the inner walls through any number of assembly or forming techniques known in the art (insert molded, formed in membrane through machining, injection molding, etc.).

The LCCM may be an elastomeric material such as ethylene vinyl acetate (EVA), thermoplastic elastomer (TPE), or silicone, to allow motion of the inner walls and provide a greater jet coverage area with minimal mechanics, reducing the volumetric flow requirements to achieve optimized performance, while providing a softer and more flexible material to protect the teeth if direct contact with the teeth is made. A flexible membrane may also provide acceptable fitment over a large range of users, due to its ability to conform to the teeth. Alternatively, the LCCM could be made of a rigid or semi-rigid material, such as but not limited to a thermoplastic.

In an alternate embodiment, the LCCM could also include abrasive elements such as filaments, textures, polishing elements, additives (silica, etc.), and other geometric elements that could be used for other cleaning and/or treatment requirements as well as ensuring minimal distance between the teeth and LCCM for, but not limited to, treatment, cleaning, and positioning.

The LCCM could be created via a variety of methods such as, but not limited to, machining, injection molding, blow molding, extrusion, compression molding, and/or vacuum forming. It can also be created in conjunction with the manifold, but incorporating the manifold circuitry within the LCC, and/or over-molded onto the manifold to provide a unitary construction with minimal assembly.

In one embodiment, the LCCM may be fabricated separately and then assembled to the manifolds, utilizing any number of assembling and sealing techniques, including adhesives, epoxies, silicones, heat sealing, ultrasonic welding, and hot glue. The LCCM is designed in a way that, when assembled with the manifold, it effectively and efficiently creates the preferred multi- manifold design without any additional components.

In certain embodiments, the LCCM can also be designed or used to create the gingival sealing area. In certain embodiments, a vacuum is applied within the LCC, which improves the engagement of the mouthpiece to form a positive seal with the gingival in the oral cavity. In other embodiments, a pressure is applied outside the LCCM, within the oral cavity, which improves the engagement of the mouthpiece to form a positive seal with the gingival in the oral cavity. In yet other embodiments, a denture-like adhesive may be applied around the mouthpiece during the initial use to provide a custom reusable resilient seal when inserted into the oral cavity for a particular user. It would then become resiliently rigid to both conform and provide a positive seal with the guns and on subsequent applications. In another embodiment, the seal could be applied and/or replaced or disposed of after each use.

Devices of the invention also comprises a first manifold for containing the fluid and for providing the fluid to the LCC through the openings of the front inner wall, and a second manifold for containing the fluid and for providing the fluid to the chamber through the openings of the rear inner wall. This design provides a number of different options, depending on what operation is being conducted. For instance, in a cleaning operation, it may be preferable to deliver jets of fluid into the LCC directly onto the teeth from one side of the LCC from the first manifold and then evacuate/pull the fluid around the teeth from the other side of the LCC into the second manifold to provide controlled interdental, gumline and surface cleaning. This flow from the one side of the LCC could be repeated a number of times in a pulsing action before reversing the flow to deliver jets of fluid from the second manifold and evacuating/pulling the fluid through the back side of the teeth into the first manifold for a period of time and/or number of cycles. Such fluid action creates a turbulent, repeatable and reversible flow, thus providing reciprocation of the fluid about the surfaces of the oral cavity.

In alternate embodiments, the manifold can be of single manifold design providing pushing and pulling of the fluid through the same sets of jets simultaneously, or can be any number of manifold divisions to provide even greater control of the fluid delivery and removal of the cleaning and fluid treatment. In the multi-manifold also can be designed to have dedicated delivery and removal manifolds. The manifolds can also be designed to be integral to and/or within the LCCM.

The material for the manifold would be a semi-rigid thermoplastic, which would provide the rigidity necessary not to collapse or burst during the controlled flow of the fluids, but to provide some flexibility when fitting within the user's mouth for mouthpiece insertion, sealing/position and removal. To minimize fabrication complexity, number of components and tooling cost, the dual manifold is created when assembled with the LCCM. The manifold could also be multi-component to provide a softer external "feel" to the teeth/gums utilizing a lower durometer elastomeric material, such as, but not limited to, a compatible thermoplastic elastomer (TPE). The manifold could be created via a variety of methods such as, but not limited to machining, injection molding, blow molding, compression molding, or vacuum forming.

Devices of the invention also comprise a first port for conveying the fluid to and from the first manifold and a second port for conveying the fluid to and from the second manifold, and means for providing an effective seal of the directing means within the oral cavity, i.e. a gingival seal. In certain embodiments, the first and second ports may serve both to convey fluid to and from the first and second manifolds and to attach the mouthpiece to the means for providing fluid to the mouthpiece. In other embodiments, the directing means may further include means for attaching the directing means to means for providing fluid to the directing means.

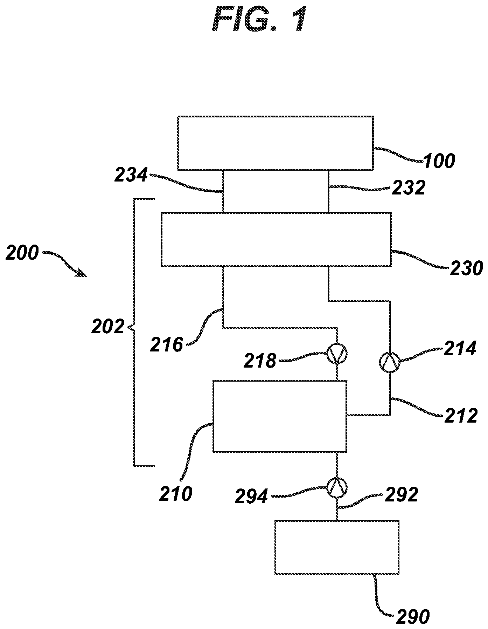

FIG. 1 is a schematic drawing of an embodiment of a system utilizing devices according to the present invention. The figure shows system **200,** with components including: means for providing reciprocation of fluid in the oral cavity **202,** means for directing the fluid onto the plurality of surfaces of the oral cavity, in this instance shown as application tray **100,** and fluid supply reservoir **290.** Means for providing reciprocation of fluids may include, in this embodiment, delivery/collection device **210,** reciprocating flow controller **230,** tubes **212, 216,** and **292** for conveying the fluid throughout the system, and fluid one-way flow valves **214, 218** and **294.** Tubes **232** and **234** provide for conveyance of the fluid from reciprocating flow controller **230** to application tray **100.**

In some embodiments, delivery/collection device **210** may be a piston pump. Fluid supply reservoir **290** may be made of glass, plastic or metal. Fluid supply reservoir **290** may be integral to system **200** and refillable. In some embodiments, fluid supply reservoir **290** may be a replaceable fluid supply, such as a single or multi-use cartridge, detachably connected to system **200.**

In some embodiments, fluid supply reservoir **290** and/or tubes **212, 292,** may include a heat source to pre-warm the fluid prior to direction into application tray **100** for application to the surfaces of the oral cavity. The temperature should be maintained within a range effective to provide efficacy and comfort to the user during use.

Application tray **100,** discussed in detail herein below, could be integral with, or detachably connected to reciprocating means **202** by way of tubes **232, 234** and further attachment means (not shown). It could be one or two sided with internally, easily cleanable filters for trapping food particles. When positioned within the oral cavity, e.g. about the teeth and gums, tray **100** forms an effective fit or seal against the gums, and includes means to direct fluid against surfaces of the oral cavity, e.g. surfaces of the teeth.

Fluid in fluid supply reservoir **290** flows through tube **292** to delivery/collection device **210.** Fluid flow through tube **292** is controlled by one-way flow valve **294.** From delivery/collection device **210,** fluid flows through tube 212 to reciprocating flow controller **230.** One-way flow valve **214** controls the fluid flow through tube **212.** Fluid flows from reciprocating flow controller **230** to application tray **100** either through tube **232** or **234,** depending on the flow direction setting of reciprocating flow controller **230.** Fluid flows from application tray **100,** through either tube **234** or **232** back to reciprocating flow controller **230,** and from reciprocating flow controller **230** to delivery/collection device **210,** through tube **216.** One-way flow valve **218** controls the fluid flow through tube **216.**

The actions of delivery/collection device **210** may be controlled by a logic circuit, which may include a program to start the reciprocation cycle, a program to execute the reciprocation cycle, i.e. to cause fluid to be reciprocated about the teeth, thereby providing the beneficial effect to the oral cavity, e.g. cleaning the teeth, a program to empty application tray **100** at the end of the reciprocation cycle, and a self-cleaning cycle to clean the system between uses, or at pre-set or automatic cleaning times.

Though not shown, a face panel with a series of switches and indicator lights may also be incorporated into system **200.** Switches may include, but are not limited to, on/off, fill application tray **100,** run the reciprocation program, empty system **200,** and clean system **200.** Indicator, or display, lights include, but are not limited to, power on, charging, reciprocation program running, system emptying, cleaning results or feedback, and self-cleaning cycle in operation. In embodiments where fluid is pre-warmed prior to direction into application tray **100,** a display light could be used to indicate that the fluid is at the proper temperature for use.

One method of using system **200** to clean teeth is as follows. In the first step, the user positions application tray **100** in the oral cavity about the teeth and gingival area. The user closes down on tray **100,** thereby achieving an effective fit or seal between gums, teeth and tray **100.** In use of the system according to the invention, the user pushes a start button initiating the cleaning process. The cleaning process is as follows:
1. Delivery/collection device **210** is activated to begin drawing cleaning fluid from fluid supply reservoir **290** through tube **292** and one-way flow valve **294.**
2. Once delivery/collection device **210** is sufficiently filled, delivery/collection device **210** is activated to begin dispensing cleaning fluid to application tray **100** via tube **212,** one-way valve **214,** reciprocating flow controller **230,** and tube **232.** Cleaning fluid will be prevented from flowing through tubes **216** and **292** by one-way flow valves **218** and **294,** respectively.
3. Delivery/collection device **210** is activated to begin drawing cleaning fluid from application tray **100** through tube **234,** then through reciprocation flow controller **230,** then through tube **216** and one-way flow valve **218.** Cleaning fluid will be prevented from flowing through tube **212** by one-way flow valve **214.** If there is insufficient cleaning fluid to adequately fill delivery/collection device **210,** additional cleaning fluid may be drawn from fluid supply reservoir **290** through tube **292** and one-way flow valve **294.**
4. The direction of the fluid flow is then reversed.
5. To reciprocate the cleaning fluid, steps 2 and 3 are repeated after the flow direction is reversed, cycling cleaning fluid between delivery/collection device **210** and application tray **100,** using tubes **234** and **232,** respectively.
6. The reciprocation cycle described continues until the time required for cleaning has expired, or the desired numbers of cycles are complete.

It is noted that there may be a delay between steps 2 and 3 (in either or both, directions), allowing a dwell time where the fluid is allowed to contact the teeth without flow.

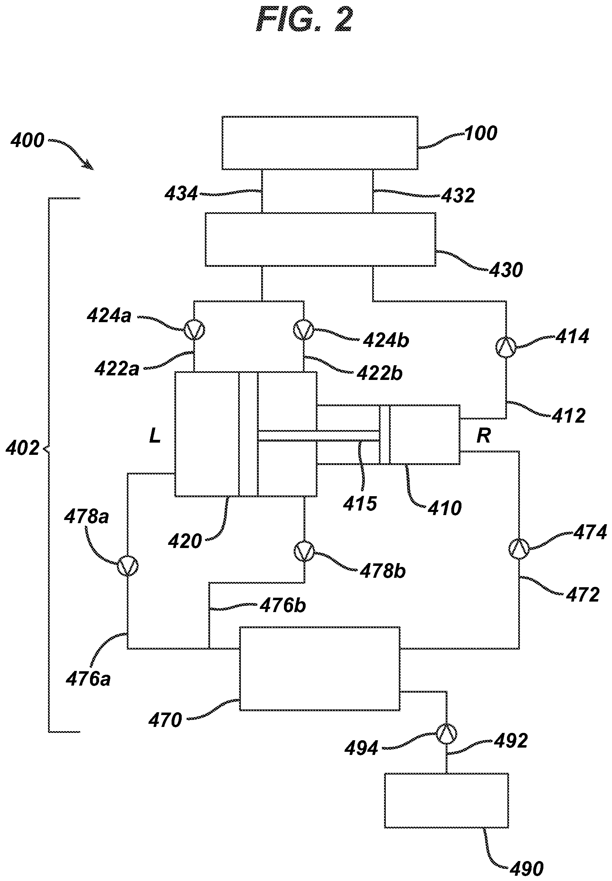

FIG. 2 is a schematic drawing of a first alternative embodiment of a system utilizing devices according to the present invention. The figure shows system **400,** with components including: means for providing reciprocation of fluids in the oral cavity **402,** fluid reservoir **470,** fluid supply reservoir **490,** and means for directing the fluid onto the plurality of surfaces of the oral cavity, in this instance shown as application tray **100.** Means for providing reciprocation **402** may include delivery device **410,** collection device **420,** reciprocating flow controller **430,** tubes **412, 422a, 422b, 472, 476,** and **492,** and solution one-way flow valves **414, 424a, 424b, 474, 478,** and **494.** Tubes **432** and **434** provide for conveyance of the fluid from reciprocating flow controller **430** to application tray **100.**

In the present embodiment, delivery device **410** and collection device **420** are housed together as a duel action piston pump, with common piston **415.** Fluid supply reservoir **490** and fluid reservoir **470** may be made of glass, plastic, or metal. Fluid supply reservoir **490** may be integral to system **400** and refillable. In some embodiments, fluid supply reservoir **490** may be a replaceable fluid supply, detachably connected to system **400.**

In some embodiments, any of fluid supply reservoir **490,** fluid reservoir **470,** or tubes **412, 472, 492,** may include a heat source to pre-warm cleaning solution prior to direction into application tray **100** for application to the teeth. The temperature should be maintained within a range effective to provide comfort to the user during use.

Application tray **100** could be integral with, or detachably connected to reciprocating means **402** by way of tubes **432, 434** and other attachment means (not shown).

Fluid in fluid supply reservoir **490** flows through tube **492** to fluid reservoir **470.** Fluid in fluid reservoir **470** flows through tube **472** to delivery device **410.** Fluid flow through tube **472** is controlled by one-way flow valve **474.** From delivery device **410,** fluid flows through tube **412** to reciprocating flow controller **430.** One-way flow valve **414** controls the fluid flow through tube **412.** Fluid flows from reciprocating flow controller **430** to application tray **100** through tube **432** or tube **434,** depending on the flow direction. Fluid flows from application tray **100,** through tube **434** or tube 432, again depending on the flow direction, back to reciprocating flow controller **430,** and from reciprocating flow controller **430** to collection device **420,** through tubes **422a** and **422b.** One-way flow valves **424a** and **424b** control the fluid flow through the tubes. Finally, fluid flows from collection device **420** to fluid reservoir **470** through tubes **476a** and **476b.** One-way flow valves **478a** and **478b** control the fluid flow through the tubes.

The actions of delivery device **410** and collection device **420** may be controlled by a logic circuit, which may include a program to the start reciprocation cycle, a program to execute the reciprocation cycle, i.e. to cause solution to be reciprocated about the plurality of the surfaces of the oral cavity, thereby providing the beneficial effect, a program to empty application tray **100** at the end of the cycle, and a self-cleaning cycle to clean the system between uses, or at pre-set or automatic cleaning times.

System **400** may also include switches such as on/off, fill application tray **100,** execute cleaning process, empty system **400,** and clean system **400,** and indicator, or display, lights including, but are not limited to, power on, charging, reciprocation program running, device emptying, and self-cleaning cycle in operation. In embodiments where fluid is pre-warmed prior to direction into application tray **100,** a display light could be used to indicate that the fluid is at the proper temperature for use.

One method of using system **400** to clean teeth is as follows. Prior to use, cleaning fluid in fluid supply reservoir **490** flows through tube **492** and one-way valve **494** to cleaning fluid reservoir **470.** In some embodiments, fluid supply reservoir **490** is now disconnected from system **400.**

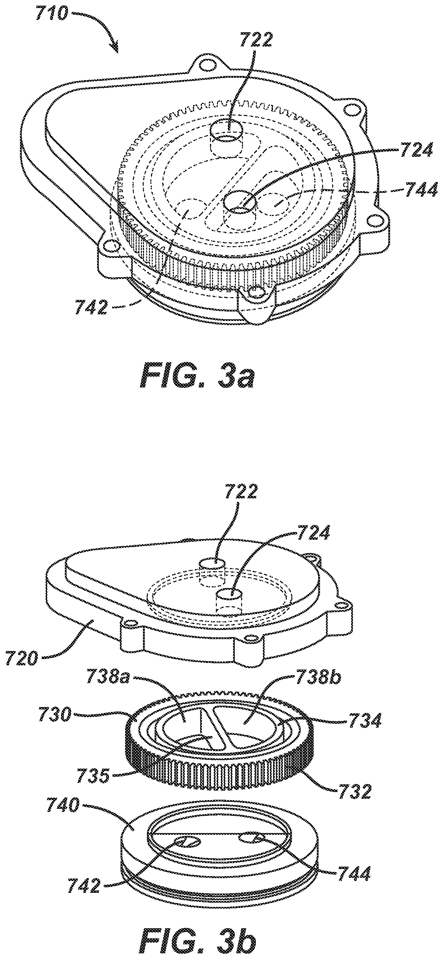

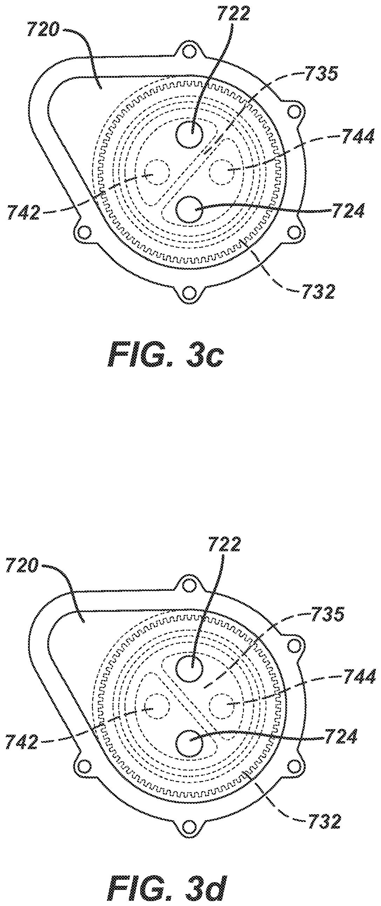

In the first step, the user positions application tray **100** in the oral cavity about the teeth and gingival area. The user closes down on tray **100,** thereby achieving an effective fit or seal between gums, teeth and tray **100.** The user pushes a start button initiating the cleaning process. The cleaning process is as follows:
1. Piston **415** is activated to begin drawing cleaning fluid to delivery device **410** from cleaning fluid reservoir **470** through tube **472** and one-way flow valve **474.** To accomplish this, piston **415** translates from right to left ("**R**" to "**L**" on FIG. 3).
2. Once delivery device **410** is sufficiently filled, delivery device **410** is activated to begin dispensing cleaning fluid to application tray **100** via tube **412,** one-way flow valve **414,** reciprocating flow controller **430,** and tube **432.** To accomplish this, piston **415** translates from left to right **("L"** to **"R"** on FIG. 3). The **"L"** to **"R"** motion of piston **415** causes collection device **420** to begin drawing cleaning fluid from application tray **100** via tube **434,** reciprocating flow controller **430,** tube **422a,** and one-way flow valve **424a.** Cleaning fluid will be prevented from flowing through tubes **472** and **422a,** by one-way flow valves **474** and **424b.** Any excess cleaning fluid in collection device **420** will begin dispensing to cleaning fluid reservoir **470** via tube **476b** and one-way valve **478b.** Cleaning fluid will be prevented from flowing through tube **422b** by one-way flow valve **424b.**
3. To cycle cleaning solution, steps 1 and 2 are repeated, cycling cleaning fluid between cleaning fluid reservoir **470** and application tray **100**
4. The process continues to run until the time required for cleaning has expired, or the desired numbers of cycles are complete.

Each embodiment described in FIG. 1 and FIG. 2 includes reciprocating flow controller (**230**, **430** in FIG. 1, FIG. 2, respectively). A perspective drawing and an exploded view of an embodiment of a reciprocating flow controller according to the present invention is shown in FIG. 3a and FIG. 3b, respectively. The figures show reciprocating flow controller **710** with cap **720,** flow diverter disk **730,** and base **740.** Cap **720** has cap ports **722** and **724.** Base **740** has base ports **742** and **744.** Flow diverter disk **730** is disposed between cap **720** and base **740,** and has panel **735** for diverting fluid flow, and position adjuster **732** in the form of a gear.

FIG. 3c is a top view of reciprocating flow controller **710** in its first position. In this position, incoming fluid, such as fluid in tube **212** of FIG. 1, enters reciprocating flow controller **710** through base port **742.** The fluid exits reciprocating flow controller **710** through cap port **722,** such as fluid in tube **232** of FIG. 1. Returning fluid, such as fluid in tube **234** of FIG. 1, reenters reciprocating flow controller **710** through cap port **724.** The fluid re-exits reciprocating flow controller **710** through base port **744,** such as fluid in tube **216** of FIG. 1.

FIG. 3d is a top view of the reciprocating flow controller **710** in its second position. In this position, incoming fluid, such as fluid in tube **212** of FIG. 1, enters reciprocating flow controller **710** through base port **742.** The fluid exits reciprocating flow controller **710** through cap port **724** such as fluid in tube **234** of FIG. 1. Returning fluid, such as fluid in tube **232** of FIG. 1, reenters reciprocating flow controller **710** through cap port **722.** The fluid exits reciprocating flow controller **710** through base port **744,** such as fluid in tube **216** of FIG. 1.

Reciprocation of fluid in application tray **100** of FIG. 1 is achieved by switching reciprocating flow controller **710** between its first and second positions. It has been found that the width of panel **735** relative to the diameters of cap ports **722** and **724** and base ports **742** and **744** is critical to the performance of reciprocating flow controller **710.** If the width of panel **735** is equal to or greater than any of the diameters, then one or more of cap ports **722** and **724** or base ports **742** and **744** may be blocked, or isolated, during part of the reciprocation, resulting in suboptimal performance or device failure. A channel may be located in panel **735** to avoid this condition.

The oral hygiene system may be comprised of several major components including, but not limited to, a base station, a hand piece for containing means for providing reciprocation of fluid about the plurality of surfaces within the oral cavity, and the application tray, or mouthpiece. The system is suitable for in-home use and adapted to direct fluid onto a plurality of surfaces of a tooth simultaneously. The device cleans teeth and removes plaque using cleaning solution that is reciprocated back and forth creating a cleaning cycle and minimizing cleaning solution used. The device could be hand held, or may be in the form of a table or counter-top device.

The base station will charge a rechargeable battery in the hand piece, hold fluid reservoirs, house diagnostic components, provide feedback to the user, and potentially clean the mouthpiece.

The hand piece will have a powered pump that will deliver fluid from the reservoir to the mouthpiece. The direction of flow may be reciprocated with fluid control valving, by a specialized pump (reversing its direction, etc), reversible check valves, or other similar means. The cycle time and flow velocity for each stage of the cycle will be variable and in some embodiments, be customized to each individual user. The hand piece will perform a filling process, and a cleaning and/or purging process. The hand piece and/or base station may provide feedback to the user for each stage of the process and potentially report diagnostic information.

The hand piece will be aesthetically pleasing and have a grip/feel comfortable for the user's hand. The weight and balance will be well suited to comfortable and efficient use while giving a high quality feel. Finger grips and/or touch points will be appropriately located for comfort, grip, feel, and assistance in proper orientation and grip location of the hand piece. The base station will also be aesthetically pleasing and allow the hand piece to easily and securely dock into position. The base station may or may not lock the hand piece into position once it's docked.

The third major component of the apparatus is the application tray, or mouthpiece.

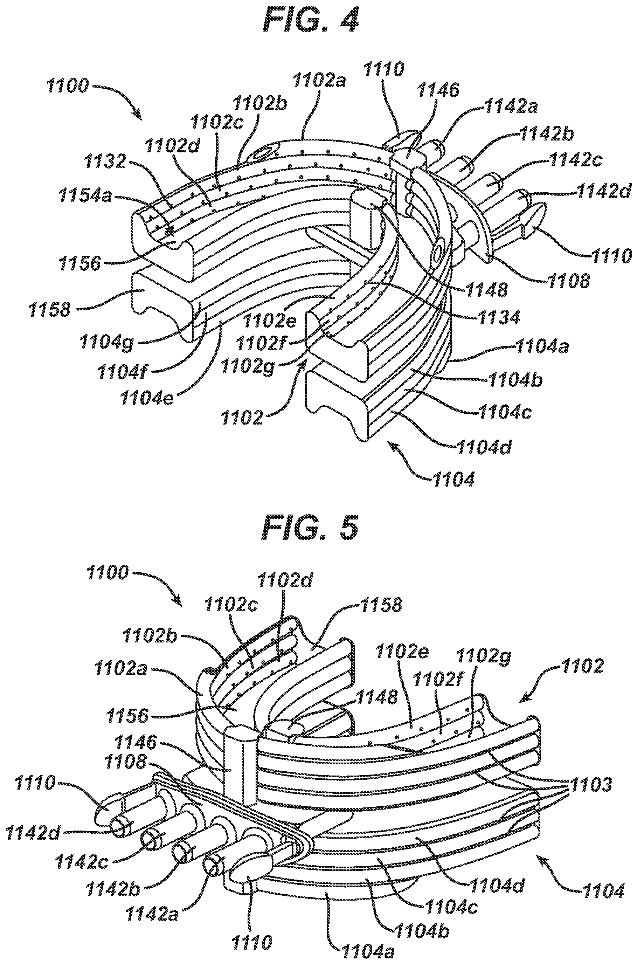

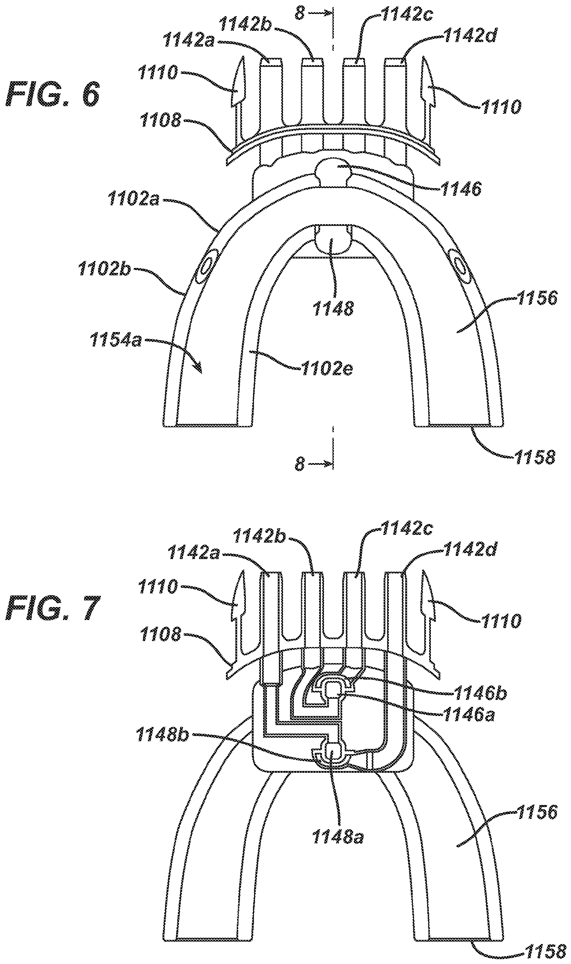

FIG. 4 is a top, rear perspective view of an embodiment of an application tray **1100** according to the present invention. FIG. 5 is a top, front perspective view of the application tray **1100** of FIG. 4, while FIG. 6 is a top view of the application tray of FIG. 4. The figures show application tray **1100** with top piece **1102,** bottom piece **1104,** first port **1142a,** second port **1142b,** third port **1142c,** forth port **1142d,** and support plate **1108** fixedly attached to the front of said application tray. First port **1142a,** second port **1142b,** third port **1142c,** and forth port **1142d,** enter application tray **1100** and extend through support plate **1108.**

Optional quick disconnect structures, e.g. barbs, **1110** are attached to support plate **1108,** allowing application tray **1100** to be quickly and easily attached to and then disconnected from means for providing fluid to the application tray, such as may be contained in the housing of a cleaning system. The housing would include structure effective to receive such quick disconnect barbs, or similar quick disconnect structure, in attachable engagement, to detachably connect the application tray to the housing. The quick disconnect option could be used to replace used or worn application trays, or to change application trays for different users. In some embodiments, a single user may change application trays to change the flow characteristics for different options, such as number of cleaning nozzles, nozzle velocity, spray pattern, and locations, coverage area, etc.

FIGs. 4 to 8 depict an embodiment of an application tray **1100** in which the user's top and bottom teeth and/or gingival area are substantially simultaneously contacted with fluid. It should be understood that in other embodiments, application tray **1100** may be designed to contact only the top or bottom teeth or gingival area of the user with fluid.

Top piece **1102** has front fluid lumens **1102a, 1102b, 1102c,** and **1102d,** back fluid lumens **1102e, 1102f,** and **1102g,** first manifold **1146,** second manifold **1148,** base membrane **1156,** and back gum-sealing membrane **1158.** Front fluid lumens **1102a, 1102b, 1102c,** and **1102d** are all connected by first manifold **1146.** Likewise, back fluid lumens **1102e, 1102f,** and **1102g,** are all connected by second manifold **1148.**

Bottom piece **1104,** may be a mirror image of top piece **1102,** and has front fluid lumens **1104a, 1104b, 1104c,** and **1104d,** back fluid lumens **1104e, 1104f,** and **1104g,** first manifold **1146,** second manifold **1148,** base membrane **1156,** and back gum-sealing membrane **1158.** Front fluid lumens **1104a, 1104b, 1104c,** and **1104d** are all connected by first manifold **1146.** Likewise, back fluid lumens **1104e, 1104f,** and **1104g,** are all connected by second manifold **1148.**

Though FIGs. 4 and 5 show top piece **1102** with four front fluid lumens **(1102a, 1102b, 1102c,** and **1102d)** and three back fluid lumens **(1102e, 1102f,** and **1102g),** top piece **1102** may also be formed with two, three, five, six, or even seven front or back fluid lumens. Likewise, bottom piece **1104** is shown with four front fluid lumens **(1104a, 1104b, 1104c,** and **1104d)** and three back fluid lumens **(1104e, 1104f,** and **1104g),** bottom piece **1104** may also be formed with two, three, five, six, or even seven front or back fluid lumens.

It is also important to note that although the embodiment of application tray **1100** presented in this work in has four ports (first port **1142a,** second port **1142b,** third port **1142c,** and forth port **1142d),** other embodiments of application tray **1100** may have three ports, or between five and ten ports or greater.

The liquid-contacting chamber (LCC) **1154a,** mentioned above, is located in top piece **1102,** defined by front liquid lumens **(1102a, 1102b, 1102c,** and **1102d),** back liquid lumens **(1102e, 1102f,** and **1102g),** base membrane **1156,** and back gum-sealing membrane **1158.**

Though not shown, bottom piece **1104** also has a LCC **1154b,** defined by front liquid lumens **(1104a, 1104b, 1104c,** and **1104d),** back liquid lumens **(1104e, 1104f,** and **1104g),** base membrane **1156, and** back gum-sealing membrane **1158.**

The multi-lumen design provides bidirectional or dedicated lumens for flow and vacuum that are self-reinforcing and therefore do not collapse under vacuum or rupture under pressure while in use, maximizing the structural integrity, while minimizing the size of the overall application tray **1100** for user comfort during insertion, in-use, and upon removal. This decreased size also serves to provide an enhanced effective seal of the application tray in the oral cavity.

If the multiple lumens **(1102a, 1102b, 1102c, 1102d, 1102e, 1102f, 1102g, 1104a, 1104b, 1104c, 1104d, 1104e, 1104f,** and **1104g)** are connected as described above, they form a lumen hinge sections (**1103** on FIG. 5). This may result in the multi-lumen design providing conformance in the X, Y and Z directions, due to the flexibility of lumen hinge sections **1103** between each lumen. This design allows effective and feasible conformance to a variety of different users teeth and gum topography, providing the effective gum sealing without irritating the gums and allowing dynamic positioning of the fluid cleaning jets around each of the teeth to obtain proximal and interdental cleaning action. The multiple lumens are also attached to the first manifold **1146** and second manifold **1148.** This creates a secondary flexible joint providing two additional degrees of motion for the adjusting to different bite architectures that may be encountered.

The back gum-sealing membrane **1158** proves a flexible and universal sealing mechanism to minimize leakage into the oral cavity while redirecting flow onto and around teeth, to maximize treatment/cleaning area to get to hard-to-reach-places (HTRP). The membrane can provide an elastic function across the lumen longitudinal axis to form around the teeth and gums.

Base membrane **1156** provides the flexibility required for effective fit or sealing within the oral cavity and allowing redirection and flow of jets back towards the teeth and/or gingival surfaces.

Optionally, application tray **1100** could also include gum-sealing component if required, which could be attached to the front fluid lumens **1102a, 1102b, 1104a,** and **1104b,** and back fluid lumens **1102e** and **1104e** (member furthest from teeth).

Optionally, frictional elements, such as filament tufts, could also be placed or secured through any of the lumen hinge sections **1103** without significantly increasing the size of application tray **1100,** or impacting user comfort or fluid flow in the application tray **1100.**

Inner front wall jet slots **1132** are located on inner front wall of top piece **1102** and bottom piece **1104,** while inner back wall jet slots **1134** are located on inner back wall of top piece **1102** and bottom piece **1104.** The number, shape and size of inner front wall jet slots **1132** and inner back wall jet slots **1134** affect the cleaning of the teeth and gums, and can be designed to direct jets of cleaning fluid in a variety of spray patterns. The inner front wall jet slots **1132** and inner back wall jet slots **1134** shown in FIGs. 4 to 8 are only one embodiment of jet slot configuration.

FIGs. 4 through 8 depict an embodiment of an application tray **1100** in which surfaces of the users top and bottom teeth and/or gingival area are substantially simultaneously contacted by fluid to provide the desired beneficial effect. It should be understood that, in other embodiments, application tray **1100** may be designed to contact only the top or bottom teeth and/or gingival area of the user.

FIG. 7 is a partial cross-sectional view of the device of FIG. 4. The figure shows first port **1142a,** second port **1142b,** third port **1142c,** forth port **1142d,** feeding first manifold **1146** and second manifold **1148.** Specifically, second port **1142b** and third port **1142c,** feed first manifold sections **1146a** and **1146b,** respectively, while first port **1142a,** and forth port **1142d** feed second manifold sections **1148a** and **1148b,** respectively.

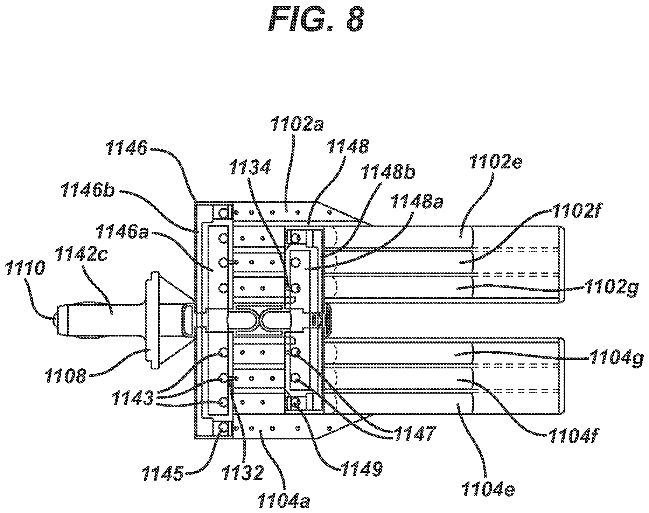

FIG. 8 is a cross-sectional view of the application tray **1100** of FIG. 6 along the 8---8 plane. The figure shows first manifold **1146** with first manifold sections **1146a** and **1146b,** and second manifold **1148,** with second manifold sections **1148a** and **1148b.** In one embodiment of a cleaning operation, cleaning fluid is pumped through second port **1142b** and third port **1142c,** and enters first feed manifold sections **1146a** and **1146b.** Fluid enters front fluid lumens **1102a, 1102b, 1102c, 1102d, 1104a, 1104b, 1104c** and **1104d** through front fluid lumen ports **1143** and **1145.** The cleaning fluid then enters LCCs **1154a** and **1154b** through inner front wall jet slots **1132.** A vacuum is pulled on first port **1142a** and forth port **1142d** pulling vacuums on second manifold sections **1148a** and **1148b.** This vacuum pulls the cleaning fluid through inner back wall jet slots **1134** into back fluid lumens **1102e, 1102f, 1102g, 1104e, 1104f,** and **1104g.** The fluid enters second manifold sections **1148a** and **1148b** through back fluid lumen ports **1147** and **1149,** then flows into first port **1142a** and forth port **1142d.**

In this embodiment, jets of cleaning fluid are first directed from first manifold **1146** to the front surfaces of the teeth and/or gingival area from one side of the LCCs, directed through, between, and around the surfaces of the teeth and/or gingival area from the other side of the LCCs into the second manifold **1148** to provide controlled interdental, gumline, surface and /or gingival area cleaning or treatment.

In some embodiments, the flow in the manifolds is then reversed. Cleaning fluid is pumped through first port **1142a** and forth port **1142d,** and enters second manifold sections **1148a** and **1148b.** Fluid enters back fluid lumens **1102e, 1102f, 1102g, 1104e, 1104f,** and **1104g** through back fluid lumen ports **1147** and **1149.** The cleaning fluid then enters LCCs **1154a** and **1154b** through inner back wall jet slots **1134.** A vacuum is pulled on second port **1142b** and third port **1142c,** which pulls the cleaning fluid through inner front wall jet slots **1132,** into front fluid lumens **1102a, 1102b, 1102c, 1102d, 1104a, 1104b, 1104c** and **1104d.** The fluid enters first feed manifold sections **1146a** and **1146b** through front fluid lumen ports **1143** and **1145,** and finally into second port **1142b** and third port **1142c.**

In the second portion of this embodiment, jets of cleaning fluid are directed onto the back surfaces of the teeth and/or gingival area, and directed through, between, and around surfaces of the teeth and/or gingival area. The alternating of pressure/vacuum through a number of cycles creates a turbulent, repeatable and reversible flow to provide reciprocation of fluid about the plurality of surfaces of the oral cavity to substantially simultaneously contact the surfaces of the oral cavity with fluid, thereby providing the desired beneficial effect.

In another embodiment it may be preferable to deliver the fluid through one or both manifolds simultaneously, flooding LCCs **1154a** and **1154b,** submerging the teeth for a period of time and then evacuating the LCCs after a set period of time through first port **1142a,** second port **1142b,** third port **1142c,** forth port **1142d,** feeding first manifold **1146** and second manifold **1148.** Fluid then simultaneously enters front fluid lumens **1102a, 1102b, 1102c, 1102d, 1104a, 1104b, 1104c** and **1104d** through front fluid lumen ports **1143** and **1145,** and back fluid lumens **1102e, 1102f, 1102g, 1104e, 1104f,** and **1104g** through back fluid lumen ports **1147** and **1149.** The cleaning fluid then enters LCCs **1154a** and **1154b** through inner front wall jet slots **1132** and inner back wall jet slots **1134.** To evacuate the LCCs, a vacuum is simultaneously pulled on first manifold **1146** through second port **1142b** and third port **1142c,** and second manifold **1148** through first port **1142a** and forth port **1142d.** Cleaning or treatment fluid is pulled through inner front wall jet slots **1132** and inner back wall jet slots **1134,** into first manifold **146** and second manifold **148.**

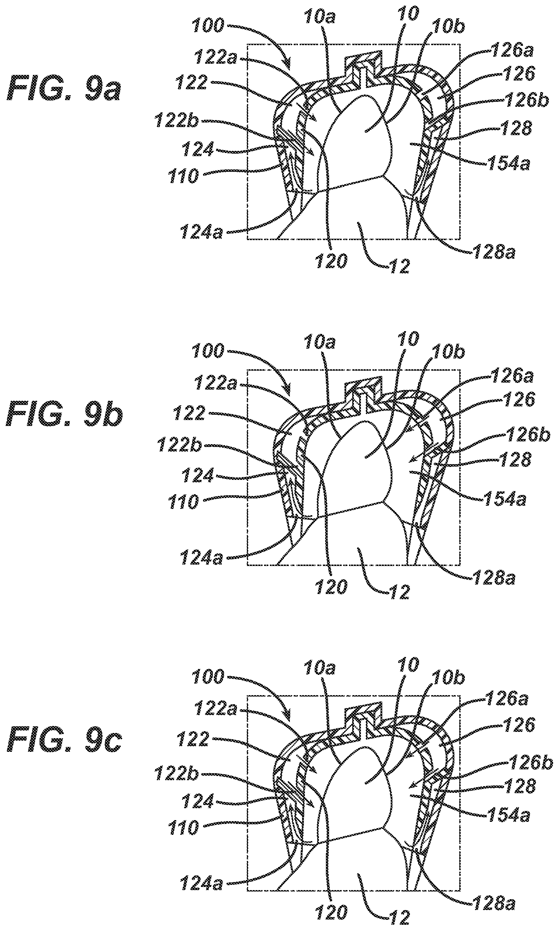

FIG. 9a through 9c are partial cut-away views of the application tray **100** in several other operating modes. The figures all show tooth **10** and portion of gums **12** contained in liquid-contacting chamber (LCC) **154a** formed by inner wall **120** of application tray **100.** Tooth **10** has first side **10a** and second side **10b.** In the cut-away views, application tray **100** has outer wall **110** and inner wall **120.** Manifolds defined by outer wall **110** and inner wall **120** include first manifold **122,** second manifold **124,** third manifold **126,** and fourth manifold **128.** The figures also show some of the nozzles for each of the manifolds. Nozzles **122a** and **122b** are in shown in first manifold **122.** Nozzle **124a** is shown in second manifold **124.** Nozzles **126a** and **126b** are shown in third manifold **126.** Nozzles **128a** is shown in fourth manifold **128.**

In the operating mode shown in FIG. 9a, pressure is put on the fluid in first manifold **122,** while vacuum is pulled on second manifold **124** and fourth manifold **128.** Fluid from first manifold **122** enters fluid-contacting chamber (LCC) **154a** through jet slots **122a** and **122b** which are directed toward first side **10a** of tooth **10.** Fluid leaves LCC **154a** through jet slots **124a** in second manifold **124** and jet slot **128a** in fourth manifold **128.**

In the operating mode shown in FIG. 9b, pressure is put on the fluid in third manifold **126,** while vacuum is pulled on second manifold **124.** Fluid from third manifold **126** enters fluid-contacting chamber (LCC) **154a** through jet slots **126a** and **126b** which are directed toward second side **10b** of tooth **10.** Fluid leaves LCC **154a** through jet slots **124a** in second manifold **124.**

In the operating mode shown in FIG. 9c, pressure is put on the fluid in first manifold **122** and third manifold **126,** while vacuum is pulled on second manifold **124** and fourth manifold **128.** Fluid from first manifold **122** and third manifold **126** enters fluid-contacting chamber (LCC) **154a** through jet slots **122a** and **122b,** and jet slots **126a** and **126b,** respectively. In this mode, fluid is simultaneously directed toward first side **10a** and second side **10b** of tooth **10.** Fluid leaves LCC **154a** through jet slots **124a** in second manifold **124** and jet slot **128a** in fourth manifold **128.**

Though five modes of operation of application tray **100** have been presented, it is to be understood that there are many other operating modes in which pressure/vacuum may be placed on the fluid contained in first manifold **122,** second manifold **124,** third manifold **126,** and fourth manifold **128.** In each of these modes, the fluid dynamics for cleaning or treating first side **10a** and second side **10b** of tooth **10** may differ, and optimum methods of cleaning or treating the teeth of the user may be determined.

It is also possible to deliver different fluid compositions to first manifold **122,** second manifold **124,** third manifold **126,** and fourth manifold **128.** The different fluid compositions would then combine in the LCC for improved cleaning efficacy or treatment effects. In the dual manifold design it may be preferable to supply each manifold from a separate fluid supply reservoir, such as in a dual action piston pump configuration, where one supply line connects to supply first manifold **1146** and the other piston supply line provides and removes fluid from second manifold **1148,** e.g. when one manifold is being supplied with fluid the second manifold is removing fluid, and vice versa.

Returning to the embodiment of an application tray **1100** presented in FIGs. 4 through 8, valves may be inserted to further control the flow of fluid through the manifolds. In some embodiments, valves can be placed at front fluid lumen ports (**1143, 1145**) of front fluid lumens **1102a, 1102b, 1102c, 1102d, 1104a, 1104b, 1104c** and **1104d,** or at back fluid lumen ports (**1147**, **1149**) of back fluid lumens **1102e, 1102f, 1102g, 1104e, 1104f,** and **1104g** to provide improved function by allowing lumens to engage at different times (at different points in the cleaning/treatment cycle), at pulsed intervals. As an example, in one embodiment, not all lumens engage in the fluid pumping/vacuum function. Here, front fluid lumens **1102a** and **1104a,** and back fluid lumens **1102e** and **1104e,** which primarily engage the gums, only engage in the fluid vacuum function. This would help prevent fluid from leaking into the oral cavity. Valving also allows for variable flow, allowing a decreased resistance to the fluid vacuum function, or allowing increased pumping, and therefore fluid velocity, during fluid delivery.

In still other embodiments, individual inner front wall jet slots **1132** or inner back wall jet slots **1134** may have integrated one-way valves, such as duckbill valves or umbrella valves, to allow flow only in one direction out of those particular jets. This may be effective to increase vacuum relative to pressure/delivery in the LCC.

In some embodiment, the motion of the frictional elements discussed above, relative to the teeth, could be applied by a single or combination of mechanisms including, by not limited to, the fluid (via the jet slots or via turbulence of flow); movement of the membrane via the pulsing of the flexible application tray **1100;** an external vibrational mechanism to vibrate the frictional elements; linear and or rotational movement of the application tray **1100** around the teeth through user jaw motion or external driving means.

In other embodiments, a conformable substance, such as gel, may be disposed near the back gum-sealing membrane **1158,** allowing application tray **1100** to comfortably fit against the back of the mouth. Alternatively, the end of application tray **1100** may have a mechanism or attachment to extend or decrease the length of the mouthpiece to the proper length for each individual user, providing a semi-custom fit.

Manufacturing of the multi-lumen design is feasible utilizing existing available manufacturing and assembly processes such as extrusion, injection, vacuum, blow, or compression molding. Other feasible techniques include rapid prototyping techniques such as 3D printing and other additive techniques, as well as subtractive techniques.

The application tray may be custom manufactured for each individual user, or customizable by the individual user prior to use. For custom manufacture of the application tray, vacuum form molds can be created directly or indirectly from user teeth and gingival impressions, which create a model of the teeth which can then be modified to create required clearances and flow channels. These vacuum form molds can be created at low cost utilizing CAD and rapid prototyping processes.

One manufacturing method is to create individual component shells through vacuum forming. Low cost methods allow vacuuming forming of very thin wall structures. The component geometry is designed to provide the interlocking features and structural geometry to allow minimization of the size of the application tray. When assembled, the manufactured components form the necessary manifolds and flow structure (bidirectional and/or dedicated manifolds) to provide the required performance characteristics for treating/cleaning the teeth.

Customized mouthpieces are based on the user's teeth geometry, therefore creating a consistent distance between the mouthpiece and teeth may provide a more consistent cleaning/treating experience. The materials for each of the two-piece shell may be different, therefore allowing for softer material (on the inside shell) where it contacts teeth/gums and harder material on the outside shell to maintain rigidity and the overall shape.

For customizable application trays, tray pre-forms (similar to sport mouth guards or teeth grinding appliances) containing pre-manufactured manifolds, nozzles and channels are mass manufactured. The tray pre-forms can be created through a variety of known manufacturing techniques including, but not limited to, blow molding, vacuum forming, injection and/or compression molding. The material used in the pre-form would be a low temperature deformable plastic material. The pre-form would be used in conjunction with required spacers to be applied over the teeth to provide required clearance, cleaning and/or treatment performance. Once the clearance components are applied to the teeth, the pre-form would be heated via microwave or by placing in boiling water so as to be pliable. The pliable pre-form would be applied onto the user's teeth and gingival area to create the customized application tray.

The application tray can be integrated with stressing features to allow elastic conformance to maximize positioning, comfort and performance during application and in use. For example, spring-like elements such as shins, clips and elastic bands may provide fitting over and against gums.

Materials for the mouthpiece lumen could range from lower durometer flexible materials (25 shore A) to harder materials more rigid materials (90 shore A), preferably being between 30 and 70 shore A.

Materials could be silicone, thermoplastic elastomer (TPE), polypropylene (PP), polyethylene (PE), polyethylene terephthalate (PET), ethylene vinyl acetate (EVA), polyurethane (PU), or multi-component (combination of materials and hardness) to achieve desired design and performance attributes.

The jet openings or slots could be made through a secondary operation such as drilling or punching, or formed during molding. Alternatively, the jet openings or slots could be inserted into the application tray to provide increased wear and or different jet performance characteristics, and could be combined with frictional cleaning elements or other components to enhance the cleaning and/or treatment affect.

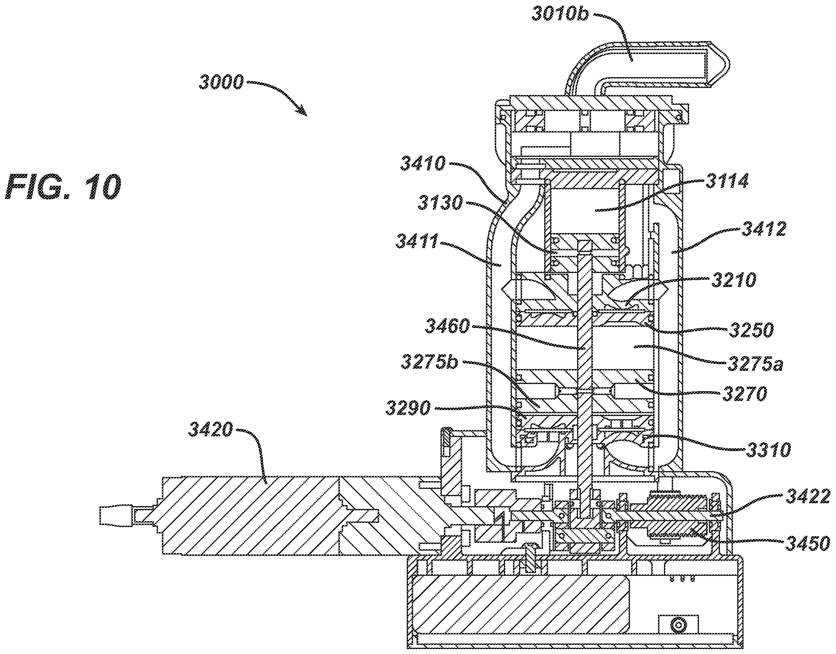

An embodiment of a hand-held device used with devices according to the present invention is shown in FIG. 10. The device has previously been presented in U. S. Patent Publication US2011002776, and will be briefly described below.

FIG. 10 is a cut-away view of device **3000,** showing the spatial relationships between the components in the pumping section, vacuum section, and pumping and driving sections. Cylinder volume **3412** is the volume of vacuum cylinder sleeve **3410** not occupied by the components of the pumping section, vacuum section, and pumping and driving sections, and serves as the fluid reservoir in the embodiment shown. The general operation of device **3000,** is as follows:
1. Device **3000** is sufficiently filled with cleaning fluid. The fluid initially resides in cylinder volume **3412** of vacuum cylinder sleeve **3410.**
2. The user inserts any embodiment of an application tray, for example application tray **100,** into their mouth. Device **3000** may be activated by a sensor (pressure sensor, proximity sensor, etc.) or the device may be activated by the user. The cleaning cycle is initiated.
3. On the "down stroke" of piston rod **3460,** delivery piston **3130** pulls fluid from the bottom of cylinder volume **3412** through several one-way valves, and finally into delivery volume **3114.**
4. On the "upstroke" of piston rod **3460,** delivery piston **3130** forces the fluid though several one-way valves, and finally through base port **742** of reciprocating flow controller **710** (see FIGs 3).
5. Fluid flow through reciprocating flow controller **710** is described earlier using FIG. 3c and FIG. 3d. In brief, when reciprocating flow controller **710** in its first position (FIG. 3c), incoming fluid from delivery volume **3114** enters reciprocating flow controller **710** through base port **742.** The fluid exits reciprocating flow controller **710** through cap port **722,** flowing into outlet pipe **3010b.** Returning fluid, flowing in through outlet pipe **3010a,** reenters reciprocating flow controller **710** through cap port **724.** The fluid exits reciprocating flow controller **710** through base port **744.** When reciprocating flow controller **710** in its second position (FIG. 3d), incoming fluid from delivery volume **3114** enters reciprocating flow controller **710** through base port **742.** The fluid exits reciprocating flow controller **710** through cap port **724,** flowing into outlet pipe **3010a.** Returning fluid, flowing in through outlet pipe **3010b,** reenters reciprocating flow controller **710** through cap port **722.** The fluid re-exits reciprocating flow controller **710** through base port **744.** Reciprocation of cleaning fluid in application tray **100** of FIG. 1 is achieved by switching reciprocating flow controller **710** between its first and second positions.
6. In the present embodiment, the vacuum section of device **3000** is effective during both the "upstroke" and "down stroke" of piston rod **3460.** Vacuum piston **3270** is dual acting, and draws fluid from application tray **100** on both the upstroke and down stroke of vacuum piston **3270.** The fluid flowing through base port **744** of reciprocating flow controller **710** flows through several sections of device **3000,** arriving in cylinder volume **3412.** The fluid in cylinder volume **3412** is then drawn to vacuum volumes **3275a** or **3275b.** During the "upstroke" of piston rod **3460,** the fluid in cylinder volume **3412** is drawn through several ports and one-way valves, arriving in vacuum volume **3275b.** During the "down stroke" of piston rod **3260,** the fluid in cylinder volume **3412** is drawn through several ports and one-way valves, arriving in vacuum volume **3275a.** As noted, the vacuum piston **3270** in this embodiment is dual acting, drawing fluid from application tray **100** on both the upstroke and down stroke of vacuum piston **3270.** So, while vacuum volume **3275b** is drawing in fluid from cylinder volume **3412,** the fluid in vacuum volume **3275a** is being pumped into cylinder volume **3412.** In contrast, while vacuum volume **3275a** is drawing in fluid from cylinder volume **3412,** the fluid in vacuum volume **3275b** is being pumped into cylinder volume **3412.** During the "upstroke" of piston rod **3460,** the fluid in vacuum volume **3275a** is pumped through several ports and one-way valves, arriving in cylinder volume **3412.** During the "down stroke" of piston rod **3260,** the fluid in vacuum volume **3275b** is pumped through several ports and one-way valves, arriving in cylinder volume **3412.**
7. The cycle continues with cycles comprising both "upstrokes" and "down strokes" of piston rod **3260,** with fluid motion through device **3000** as described in steps 3 through 6 above.

The ratio of the total volume of vacuum volumes **3275a** and **3275b** to delivery volume **3114** may be any range, such as 1:1, optionally about 3:1 or greater, or about 4:1 or greater. Since delivery piston **3130** only delivers fluid on one "half' of the pumping/vacuuming cycle, while vacuum piston **3270** works on both halves of the cycle, the ratio of the volume of fluid delivered to application tray **100** to the volume of fluid drawn from application tray **100** is 8:1 per cycle. The dual acting vacuum piston **3270** also provides vacuum during the half of the stroke where delivery piston **3130** is not delivering fluid, increasing the opportunity to retrieve fluid from application tray **100,** as well as clear additional fluid which leaked from application tray **100** into the oral cavity. Testing has shown a minimum 3:1 volumetric ratio of fluid vacuum to fluid delivery per stroke provided the necessary vacuum to minimize leakage into the oral cavity from application tray **100** when the tray has a marginal gingival seal, which may occur in embodiments of a universal (designed to fit a range of people) application tray **100** design.

In some embodiments vacuum piston **3270** is single acting. However, a dual acting vacuum piston **3270** may show some advantages.

In one embodiment, the hand-held device will be a self-contained, portable unit with a rechargeable battery, have a motor-driven piston pump for fluid delivery, have a mechanism to control the fluid flow, keep the temperature within a specified range, be modular in design, and have ergonomics well-suited to the user's hand. When the hand piece is in the base station, it will recharge the battery, refill the fluid reservoirs in the hand piece from those in the base station, and exchange samples and/or diagnostic information with the base station. It may also go through a cleaning process.

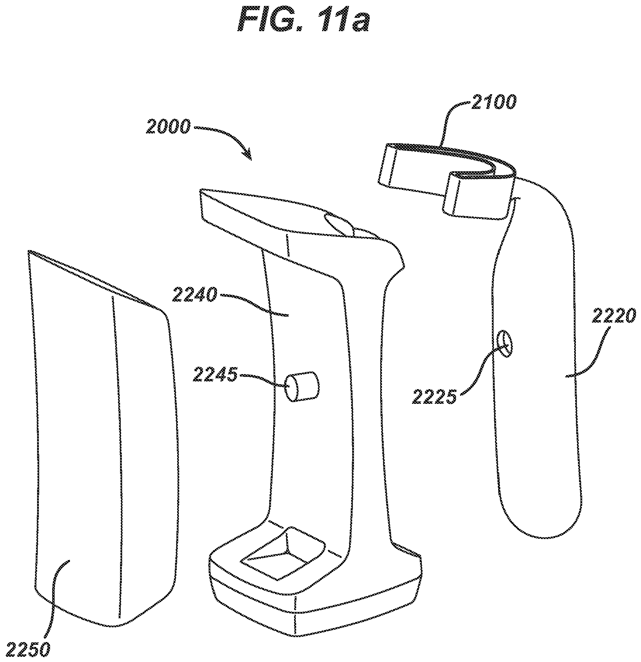

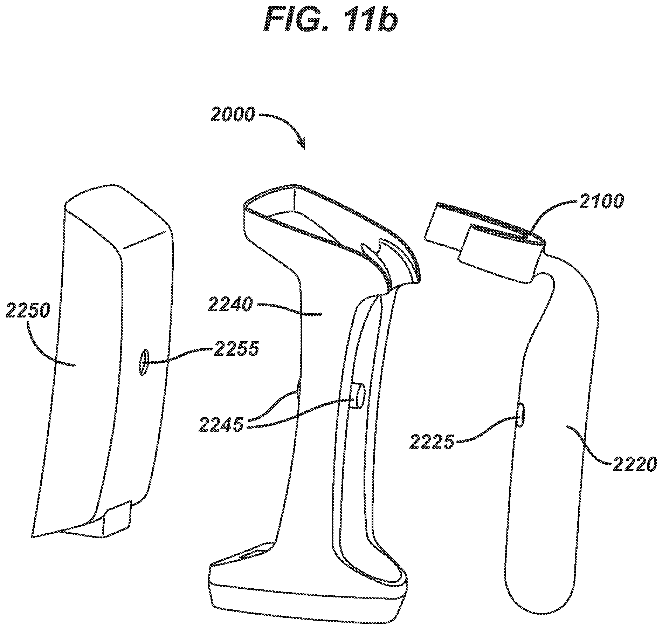

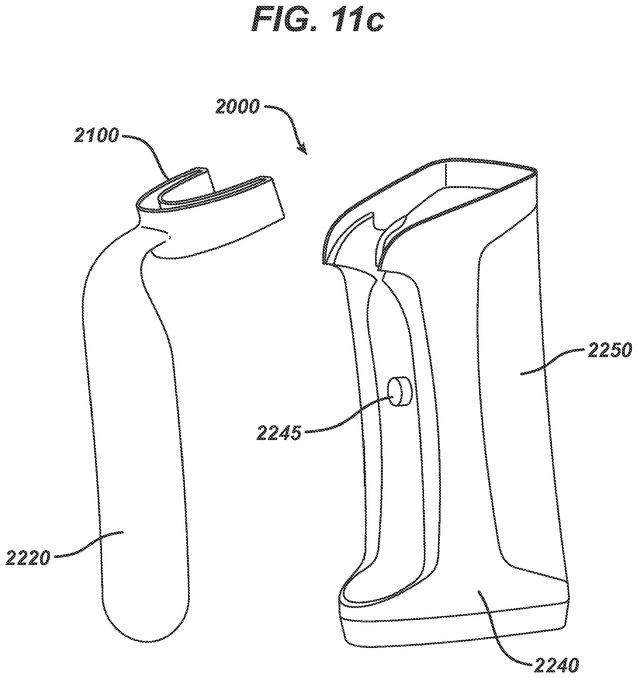

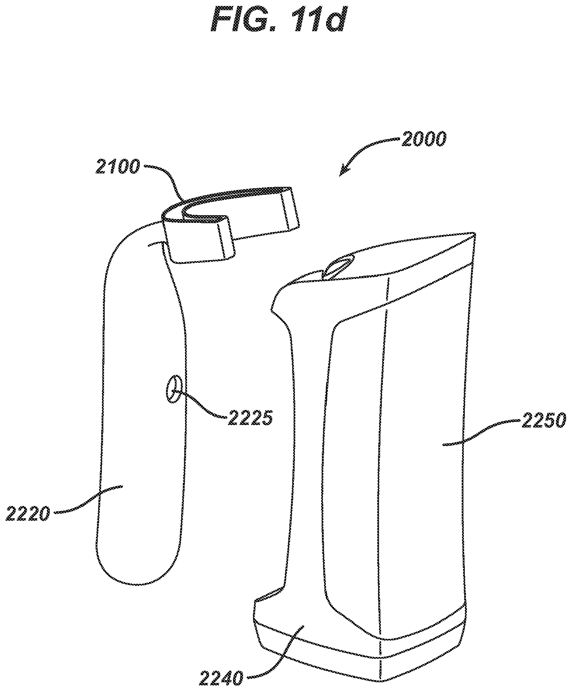

FIGs. 11a-11d show a representation example of an embodiment of a dental cleaning system **2000.** The figures show dental cleaning system **2000,** showing hand-held **device2220,** base station **2240,** and base station fluid reservoir **2250.** Base station fluid reservoir **2250** is used to refill the fluid reservoirs in device **2220.** Application tray **2100** is shown attached to device **2220.**

In this embodiment, base station fluid port **2245** is the conduit through which cleaning or treatment fluid passes from base station fluid reservoir **2250** to the fluid reservoirs in device **2220.** Fluid leaves base station fluid reservoir **2250** through base station fluid reservoir port **2255,** and enters the fluid reservoirs in device **2220** through port **2225.**

When in base station **2240,** the internal battery of device **2220** will recharge, and the fluid reservoirs in device **2220** will refill from those in base station **2240.** Any diagnostic information in device **2220** will be exchanged with base station **2240.** Device **2220** may also go through a cleaning process.

In other embodiments, a piston pump with check-valves will be used for fluid delivery and/or removal.

In yet other embodiments, a rotary piston pump will be used for fluid delivery and/or removal. This pump is known by those in the art, and the piston rotates as it reciprocates, therefore not needing any valves to operate. Reversing the rotation direction of the drive motor will reverse the fluid flow direction.

In still other embodiments diaphragm pumps, gear pumps, or double-action piston pumps will be used for fluid delivery and/or removal. In the case of double-action piston pumps, when the fluid system is charged, this pump type has the benefit of reciprocating the direction of the fluid flow to the mouthpiece. Charged pneumatic cylinders, hand pump, or rotary pumps may be used to drive the system.

Though several embodiments have been described, it should be understood that the scope of the present invention embraces other possible variations, being limited only by the contents of the accompanying claims, which includes the possible equivalents.

## Claims

1. A system (200) for directing a fluid onto a plurality of surfaces of an oral cavity of a mammal, said system comprising a device (100) comprising:
a chamber (154a) for maintaining said fluid proximate said plurality of surfaces, said chamber defined by front and rear inner walls and a base inner wall of said device, said base inner wall extending between said front and rear inner walls, said front and rear inner walls comprising a plurality of openings,
a first manifold (122) for containing a first portion of said fluid and providing said first portion to said chamber through said openings (122a, 122b) of said front inner wall,
a second manifold (124) for containing a second portion of said fluid and providing said second portion to said chamber through said openings (124a) of said front inner wall,
a third manifold (126) for containing a third portion of said fluid and providing said third portion to said chamber through said openings (126a, 126b) of said rear inner wall,
a fourth manifold (128) for containing a fourth portion of said fluid and providing said fourth portion to said chamber through said openings (128a) of said rear inner wall,
a first port (1142b) configured to convey said first portion of fluid to and from said first manifold,
a second port (1142c) configured to convey said second portion of fluid to and from said second manifold,
a third port (1142a) configured to convey said third portion of fluid to and from said third manifold,
a fourth port (1142d) configured to convey said fourth portion of fluid to and from said fourth manifold; and
means for providing an effective seal (1156, 1158) of said device within said oral cavity; and means for providing pressure, such that said fluid enters the chamber (154a) or vacuum, such that fluid leaves the chamber (154a), on said first, second, third, and fourth manifolds (122, 124, 126, 128).

2. The system of claim 1 further comprising means for attaching (1110) said device to means for providing said fluid to said device.

3. The system of claim 2 wherein said attachment means (1110) comprises a quick disconnect structure for attaching said device to said means for providing said fluid to said device.

4. The system of claim 2 wherein said attachment means comprises a support plate (1108) fixedly attached to the front of said device and having first (1142b), second (1142c), third (1142a) and fourth (1142d) ports extending there through, said support plate (1108) comprising a structure for attaching said device to said means for providing fluid to said device.

5. The system of claim 1 wherein the number, location and cross-sectional geometry of said openings (122a, 122b, 124a, 126a, 126b, 128a) are effective to provide a spray pattern effective to provide a beneficial effect to the oral cavity.

6. The system of claim 1 comprising a top piece and a bottom piece for providing substantially simultaneous contact of a plurality of surfaces of both top and bottom sections of said oral cavity.

7. The system of claim 1 wherein the cross-sectional geometry of said openings is selected from the group consisting of circular, elliptical and trapezoidal.

8. The system of claim 1 wherein said base inner and outer walls comprise a flexible membrane (1156) for providing said effective seal.

9. The system of claim 8 comprising a flexible gum-sealing membrane (1158) for providing said effective seal.

## Patentansprüche

1. System (200) zum Lenken einer Flüssigkeit auf eine Vielzahl von Oberflächen einer Mundhöhle eines Säugetiers, wobei das System eine Vorrichtung (100) umfasst, umfassend:
eine Kammer (154a) zum Halten der Flüssigkeit in der Nähe der Vielzahl von Oberflächen, wobei die Kammer durch eine vordere und hintere Innenwand und eine Basisinnenwand der Vorrichtung definiert ist, wobei sich die Basisinnenwand zwischen der vorderen und hinteren Innenwand erstreckt, wobei die vordere und hintere Innenwand eine Vielzahl von Öffnungen umfasst,
einen ersten Verteiler (122) zum Enthalten eines ersten Teils der Flüssigkeit und zum Liefern des ersten Teils an die Kammer über die Öffnungen (122a, 122b) der vorderen Innenwand,
einen zweiten Verteiler (124) zum Enthalten eines zweiten Teils der Flüssigkeit und zum Liefern des zweiten Teils an die Kammer über die Öffnungen (124a) der vorderen Innenwand,
einen dritten Verteiler (126) zum Enthalten eines dritten Teils der Flüssigkeit und zum Liefern des dritten Teils an die Kammer über die Öffnungen (126a, 126b) der hinteren Innenwand,
einen vierten Verteiler (128) zum Enthalten eines vierten Teils der Flüssigkeit und zum Liefern des vierten Teils an die Kammer über die Öffnungen (128a) der hinteren Innenwand,
einen ersten Anschluss (1142b), der dazu ausgelegt ist, den ersten Teil der Flüssigkeit an den ersten Verteiler und davon wegzutransportieren,
einen zweiten Anschluss (1142c), der dazu ausgelegt ist, den zweiten Teil der Flüssigkeit an den zweiten Verteiler und davon wegzutransportieren,
einen dritten Anschluss (1142a), der dazu ausgelegt ist, den dritten Teil der Flüssigkeit an den dritten Verteiler und davon wegzutransportieren,
einen vierten Anschluss (1142d), der dazu ausgelegt ist, den vierten Teil der Flüssigkeit an den vierten Verteiler und davon wegzutransportieren; und
Mittel zum Bereitstellen einer effektiven Dichtung (1156, 1158) der Vorrichtung innerhalb der Mundhöhle;
und Mittel zum Bereitstellen von Druck, sodass die Flüssigkeit in die Kammer (154a) eintritt, oder Vakuum, sodass die Flüssigkeit die Kammer (154a) verlässt, an dem ersten, zweiten, dritten und vierten Verteiler (122, 124, 126, 128) .

2. System nach Anspruch 1, ferner umfassend ein Mittel zum Befestigen (1110) der Vorrichtung an dem Mittel zum Liefern der Flüssigkeit an die Vorrichtung.

3. System nach Anspruch 2, wobei das Befestigungsmittel (1110) eine schnell trennbare Verbindungsstruktur zum Befestigen der Vorrichtung an dem Mittel zum Liefern der Flüssigkeit an die Vorrichtung umfasst.

4. System nach Anspruch 2, wobei das Befestigungsmittel eine Trägerplatte (1108) umfasst, die fest an der Vorderseite der Vorrichtung befestigt ist und einen ersten (1142b), zweiten (1142c), dritten (1142a) und vierten (1142d) Anschluss aufweist, die sich dort hindurch erstrecken, wobei die Trägerplatte (1108) eine Struktur zum Befestigen der Vorrichtung an dem Mittel zum Liefern von Flüssigkeit an die Vorrichtung umfasst.

5. System nach Anspruch 1, wobei die Anzahl, Position und Querschnittsgeometrie der Öffnungen (122a, 122b, 124a, 126a, 126b, 128a) effektiv sind, um ein Sprühmuster bereitzustellen, das effektiv ist, um einen nützlichen Effekt für die Mundhöhle zu bieten.

6. System nach Anspruch 1, umfassend ein Oberteil und ein Unterteil zum Bereitstellen von im Wesentlichen gleichzeitigem Kontakt einer Vielzahl von Oberflächen von sowohl dem oberen als auch dem unteren Bereich der Mundhöhle.

7. System nach Anspruch 1, wobei die Querschnittsgeometrie der Öffnungen aus der Gruppe bestehend aus kreisförmig, elliptisch und trapezförmig ausgewählt ist.

8. System nach Anspruch 1, wobei die Innen- und die Außenwand eine flexible Membran (1156) zum Bereitstellen der effektiven Dichtung umfassen.

9. System nach Anspruch 8, umfassend eine flexible Gummidichtungsmembran (1158) zum Bereitstellen der effektiven Dichtung.

## Revendications

1. Système (200) pour diriger un fluide sur une pluralité de surfaces d'une cavité orale d'un mammifère, ledit système comprenant un dispositif (100) comprenant :
une chambre (154a) pour maintenir ledit fluide à proximité de ladite pluralité de surfaces, ladite chambre étant définie par des parois intérieures avant et arrière et une paroi intérieure de base dudit dispositif, ladite paroi intérieure de base s'étendant entre lesdites parois intérieures avant et arrière, lesdites parois intérieures avant et arrière comprenant une pluralité d'ouvertures,
un premier collecteur (122) pour contenir une première portion dudit fluide et fournir ladite première portion à ladite chambre à travers lesdites ouvertures (122a, 122b) de ladite paroi intérieure avant,
un deuxième collecteur (124) pour contenir une deuxième portion dudit fluide et fournir ladite deuxième portion à ladite chambre à travers lesdites ouvertures (124a) de ladite paroi intérieure avant,
un troisième collecteur (126) pour contenir une troisième portion dudit fluide et fournir ladite troisième portion à ladite chambre à travers lesdites ouvertures (126a, 126b) de ladite paroi intérieure arrière,
un quatrième collecteur (128) pour contenir une quatrième portion dudit fluide et fournir ladite quatrième portion à ladite chambre à travers lesdites ouvertures (128a) de ladite paroi intérieure arrière,
un premier orifice (1142b) configuré pour transporter ladite première portion de fluide vers et depuis ledit premier collecteur,
un deuxième orifice (1142c) configuré pour transporter ladite deuxième portion de fluide vers et depuis ledit deuxième collecteur,
un troisième port (1142a) configuré pour transporter ladite troisième portion de fluide vers et depuis ledit troisième collecteur,
un quatrième port (1142d) configuré pour transporter ladite quatrième portion de fluide vers et depuis ledit quatrième collecteur ; et
un moyens pour fournir un joint d'étanchéité efficace (1156, 1158) dudit dispositif à l'intérieur de ladite cavité orale ;
et un moyen pour fournir une pression, de telle sorte que ledit fluide entre dans la chambre (154a), ou un vide, de telle sorte que le fluide quitte la chambre (154a), sur lesdits premier, second, troisième, et quatrième collecteurs (122, 124, 126, 128).

2. Système selon la revendication 1, comprenant en outre un moyen pour attacher (1110) ledit dispositif à un moyens pour fournir ledit fluide audit dispositif.

3. Système selon la revendication 2, dans lequel ledit moyen d'attache (1110) comprend une structure de déconnexion rapide pour attacher ledit dispositif audit moyen pour fournir ledit fluide audit dispositif .

4. Système selon la revendication 2, dans lequel ledit moyen d'attache comprend une plaque de support (1108) attachée de façon fixe à l'avant dudit dispositif et ayant des premier (1142b), second (1142c), troisième (1142a) et quatrième (1142d) orifices s'étendant à travers celle-ci, ladite plaque de support (1108) comprenant une structure pour attacher ledit dispositif audit moyen pour fournir le fluide audit dispositif .

5. Système selon la revendication 1, dans lequel le nombre, l'emplacement et la géométrie de section transversale desdites ouvertures (122a, 122b, 124a, 126a, 126b, 128a) sont efficaces pour fournir un motif de pulvérisation efficace pour fournir un effet avantageux à la cavité orale.

6. Système selon la revendication 1, comprenant une pièce supérieure et une pièce inférieure pour fournir un contact sensiblement simultané d'une pluralité de surfaces des deux sections supérieure et inférieure de ladite cavité orale.

7. Système selon la revendication 1, dans lequel la géométrie de section transversale desdites ouvertures est sélectionnée à partir du groupe constitué de : circulaire, elliptique et trapézoïdale.

8. Système selon la revendication 1, dans lequel lesdites parois intérieure et extérieure de base comprennent une membrane flexible (1156) pour fournir ledit joint d'étanchéité efficace.

9. Système selon la revendication 8, comprenant une membrane flexible d'étanchéité gommée (1158) pour fournir ledit joint d'étanchéité efficace.
